# EUROPÄISCHE PATENTSCHRIFT

(11) **EP 2 460 056 B1**
(45) Veröffentlichungstag und Bekanntmachung des Hinweises auf die Patenterteilung: **19.06.2013**
(21) Anmeldenummer: 10736700.5
(22) Anmeldetag: 23.07.2010
(51) Int. Cl.: G05B 9/03, G05B 23/02, H02H 7/093, H02P 6/12

(54) **VERFAHREN UND VORRICHTUNG ZUM FEHLERSICHEREN ÜBERWACHEN EINER BEWEGUNGSGRÖSSE AN EINEM ELEKTRISCHEN ANTRIEB**
METHOD AND DEVICE FOR MONITORING A MOTION QUANTITY ON AN ELECTRIC DRIVE IN AN ERROR-PROOF MANNER
PROCÉDÉ ET DISPOSITIF DE SURVEILLANCE DE L'ABSENCE D'ERREUR D'UNE GRANDEUR DE DÉPLACEMENT SUR UN MÉCANISME D'ENTRAÎNEMENT ÉLECTRIQUE

(30) Priorität: 27.07.2009 DE 102009035998
(43) Veröffentlichungstag der Anmeldung: 06.06.2012
(73) Patentinhaber: Pilz GmbH & Co. KG, 73760 Ostfildern (DE)
(72) Erfinder: GAISER, Roland, 73066 Uhingen (DE); GOSSNER, Marcus, 87600 Kaufbeuren (DE); SCHEFFNER, Dirk, 69488 Birkenau (DE); GAISER, Roland, 73098 Rechberghausen (DE)
(74) Vertreter: Witte, Weller & Partner
(86) Internationale Anmeldenummer: PCT/EP2010/060685
(87) Internationale Veröffentlichungsnummer: WO 2011/012541

(56) Entgegenhaltungen:
- DE-A1- 10 035 783
- DE-A1- 10 219 821
- US-A- 5 635 810

## Beschreibung

Die vorliegende Erfindung betrifft ein Verfahren zum fehlersicheren Überwachen einer Bewegungsgröße an einem elektrischen Antrieb mit einem feststehenden Teil und einem beweglichen Teil, mit den Schritten:
- Erzeugen eines ersten und zumindest eines zweiten Antriebsstroms in Abhängigkeit von einem Sollwert der Bewegungsgröße,
- Erzeugen eines magnetischen Wechselfeldes in dem Antrieb mit Hilfe des ersten und zweiten Antriebsstroms, wobei das magnetische Wechselfeld eine Bewegung des beweglichen Teils bewirkt,
- Bestimmen eines ersten Messsignals, das den ersten Antriebsstrom repräsentiert, und Bestimmen eines zweiten Messsignals, das den zweiten Antriebsstrom repräsentiert, mit Hilfe einer Messeinrichtung,
- Bestimmen eines felderzeugenden Längsstromanteils und eines momentenerzeugenden Querstromanteils in Abhängigkeit von dem ersten und zweiten Messsignal, und
- Bestimmen eines Istwertes der Bewegungsgröße in Abhängigkeit von dem ersten und zweiten Messsignal.

Die Erfindung betrifft ferner eine Vorrichtung zum fehlersicheren Überwachen einer Bewegungsgröße an einem elektrischen Antrieb, der einen feststehenden Teil und einen beweglichen Teil besitzt, mit einem Antriebsverstärker zum Erzeugen eines ersten und zumindest einem zweiten Antriebsstrom in Abhängigkeit von einem Sollwert der Bewegungsgröße, mit einem ersten Strompfad zum Zuführen des ersten Antriebstromes und zumindest einem zweiten Strompfad zum Zuführen des zweiten Antriebsstroms zu dem Antrieb, um ein magnetisches Wechselfeld in dem Antrieb zu erzeugen, wobei das magnetische Wechselfeld eine Bewegung des beweglichen Teils bewirkt, mit einer Messeinrichtung zum Bestimmen eines ersten Messsignals, das den ersten Antriebsstrom repräsentiert, und zum Bestimmen eines zweiten Messsignals, das den zweiten Antriebsstrom repräsentiert, mit einem Wandler zum Bestimmen eines felderzeugenden Längsstromanteils und eines momentenerzeugenden Querstromanteils in Abhängigkeit von dem ersten und zweiten Messsignal, und mit einer Überwachungsschaltung zum Bestimmen eines Istwertes der Bewegungsgröße in Abhängigkeit von dem ersten und zweiten Messsignal.

Ein solches Verfahren und eine solche Vorrichtung sind aus DE 100 35 783 A1 bekannt.

Die Erfindung betrifft insbesondere die fehlersichere Überwachung eines elektrischen Antriebs zur Absicherung eines Gefahrenbereichs an einer automatisiert arbeitenden Maschine oder Anlage, wie etwa einer Werkzeugmaschine, eines Roboters, eines Förderbandes oder einer sich automatisch öffnenden und schließenden Tür. Häufig werden Gefahrenbereiche von solchen Maschinen oder Anlagen durch Schutzzäune, Lichtschranken und andere Einrichtungen abgesichert, die einen direkten Zugang in den Gefahrenbereich verhindern und/oder die Maschine oder Anlage bei einem Eingriff in den Gefahrenbereich abschalten. Es gibt jedoch Fälle, in denen der Zugang in einen Gefahrenbereich nicht gänzlich unterbunden werden kann, beispielsweise beim Einrichten eines automatisierten Arbeitsablaufs an einer Maschine oder bei einer automatischen Tür. Um das Risiko einer Verletzung von Personen auch in diesen Fällen zu minimieren, ist es bekannt, Bewegungsgrößen der gefahrbringenden Antriebe der Maschine oder Anlage, wie insbesondere die Drehzahl und/oder das Drehmoment des Antriebs, auf einen definierten Maximalwert zu begrenzen. Beispielsweise kann eine Werkzeugmaschine so bei geöffneter Schutztür mit einer reduzierten, begrenzten Geschwindigkeit betrieben werden. Um die Sicherheit von Personen in diesen Fällen zu gewährleisten, müssen die gefährlichen Bewegungsgrößen des arbeitenden Antriebs auf fehlersichere Weise überwacht werden.

Eine fehlersichere Überwachung wird üblicherweise dadurch realisiert, dass man die Bewegungsgröße zumindest zweifach überwacht und die jeweiligen Überwachungsergebnisse miteinander vergleicht. Die gefahrbringende Bewegung des Antriebs wird nur zugelassen, wenn und so lange die redundanten Überwachungsergebnisse übereinstimmen.

Die oben genannte DE 100 35 783 A1 schlägt eine redundante Sicherheitseinrichtung zum Überwachen der Drehzahl eines Synchronantriebs oder eines Asynchronantriebs vor, wobei die Drehzahl einerseits mit einem Drehzahlsensor detektiert wird, der mit einer Antriebswelle verbunden ist. Der Drehzahlsensor liefert die momentane Drehzahl als Eingangsgröße für einen Antriebsregelkreis. Zusätzlich werden in zwei der drei so genannten Phasen des Antriebs die Antriebsströme gemessen. Die gemessenen Antriebsströme werden in einen felderzeugenden Längsstromanteil und einen momentenerzeugenden Querstromanteil umgerechnet. Ein Plausibilitätsvergleich der Stromwerte mit Beschleunigungswerten, die anhand der Drehzahlsignale des Drehzahlsensors bestimmt werden, ermöglicht die Detektion von Fehlern in dem redundanten Überwachungssystem.

DE 101 63 010 A1 offenbart eine weitere Vorrichtung und ein weiteres Verfahren zur fehlersicheren Überwachung der Geschwindigkeit eines elektrischen Antriebs. Die Vorrichtung besitzt zwei Prozessoren, die einen Kreuzvergleich der Überwachungsergebnisse ermöglichen, wobei die beiden Prozessoren die Überwachung auf unterschiedliche Weise durchführen. Der erste Prozessor arbeitet den regulären Regelalgorithmus der Drehzahlregelung ab und führt anhand eines geschätzten oder gemessenen Drehzahlwertes die Überwachung durch. Der zweite Prozessor bestimmt aus gemessenen Stromwerten oder aus einer Rekonstruktion der Steuerspannung eine aktuelle Ausgangsfrequenz des so genannten Frequenzumrichters, der die Antriebsströme liefert. Mit diesem Verfahren und dieser Vorrichtung sei es möglich, auf einen separaten Drehzahlsensor zu verzichten. Eine ähnliche Vorrichtung ist auch in DE 10 2005 045 284 A1 beschrieben.

Die drei genannten Vorrichtungen und Verfahren dienen in erster Linie der Überwachung einer Drehzahl und damit der Überwachung einer Geschwindigkeit des Antriebs. Eine Überwachung auf Einhaltung eines definierten Drehmoments ist hier nicht vorgesehen.

DE 42 34 501 A1 offenbart ein Verfahren und eine Vorrichtung zur redundanten Überwachung des maximalen Drehmoments eines elektrischen Antriebs. In einem Kanal wird das momentane Drehmoment anhand der Antriebsströme bestimmt. In einem zweiten Kanal wird das momentane Drehmoment anhand einer momentanen Drehzahl und anhand eines Kennlinienfeldes des elektrischen Antriebs geschätzt, wobei die Drehzahl hier wiederum mit Hilfe eines Drehzahlsensors bestimmt wird. Dementsprechend erfordert dieses bekannte Verfahren zur Drehmomentüberwachung einen separaten Drehzahlsensor.

Vor diesem Hintergrund ist es eine Aufgabe der vorliegenden Erfindung, ein Verfahren und eine Vorrichtung der eingangs genannten Art anzugeben, die eine fehlersichere Überwachung einer Bewegungsgröße an einem elektrischen Antrieb einschließlich der fehlersicheren Überwachung eines Drehmoments auf einfache und kostengünstige Weise ermöglichen.

Gemäß einem ersten Aspekt der vorliegenden Erfindung wird diese Aufgabe durch ein Verfahren der eingangs genannten Art gelöst, wobei zumindest einer der Antriebsströme mit einem variablen Teststromanteil erzeugt wird, der ein definiertes Testmuster zum Überprüfen der Messeinrichtung bildet, wobei der Teststromanteil so gewählt ist, dass das definierte Testmuster in dem Längsstromanteil erscheint, während der Querstromanteil weitgehend frei von dem Testmuster ist.

Gemäß einem weiteren Aspekt der Erfindung wird diese Aufgabe durch eine Vorrichtung der eingangs genannten Art gelöst, mit einem Teststromgenerator, der dazu ausgebildet ist, einen variablen Teststromanteil zu erzeugen, welcher zumindest einem der Antriebsströme überlagert ist, wobei der Teststromanteil ein definiertes Testmuster zum Überprüfen der Messeinrichtung bildet, und wobei der Teststromanteil so gewählt ist, dass das definierte Testmuster in dem Längsstromanteil erscheint, während der Querstromanteil weitgehend frei von dem Testmuster ist.

Das neue Verfahren und die neue Vorrichtung beruhen auf der Idee, ein "künstlich erzeugtes" Testmuster zu verwenden, das dem ersten und/oder zweiten Antriebsstrom überlagert wird. Typischerweise wird das Testmuster allen drei Antriebsströmen eines dreiphasig angesteuerten Antriebs überlagert. Das Testmuster besitzt definierte und bekannte Eigenschaften, etwa eine bekannte Frequenz, Phasenlage, Amplitude, Signalform etc., und anhand dieser bekannten Eigenschaften lässt sich überprüfen, ob die Messeinrichtung fehlerfrei funktioniert. Wenn eine fehlerfreie Funktion der Messeinrichtung gewährleistet ist, genügt es, die Bewegungsgröße allein mit Hilfe der Antriebströme zu überwachen. Auf einen (zusätzlichen) Drehzahlsensor oder einen zweiten redundanten Messpfad kann dann verzichtet werden, was eine sehr kostengünstige und kompakte Realisierung ermöglicht.

Das neue Verfahren und die neue Vorrichtung beruhen allerdings nicht allein darauf, irgendein beliebiges Testmuster den Antriebsströmen zu überlagern, um die Funktion der Messeinrichtung zu überprüfen. Vielmehr verwenden das neue Verfahren und die neue Vorrichtung ein bestimmtes Testsignal, das so gewählt ist, dass das definierte Testmuster im Prinzip nur in dem (rechnerisch ermittelten) Längsstromanteil erscheint. Vorzugsweise ist der Querstromanteil der Antriebsströme gänzlich frei von dem Testmuster, d.h. das Testmuster findet sich lediglich in dem Längsstromanteil wieder und lässt den Querstromanteil unbeeinflusst. Allerdings ist nicht ausgeschlossen, dass aufgrund technischer und/oder kostenbedingter Überlegungen ein geringer Teil des Testmusters auch noch in dem Querstromanteil erscheinen kann. Das neue Verfahren und die neue Vorrichtung beruhen jedoch darauf, dass vor allem der Längsstromanteil das Testmuster beinhaltet und somit zum Überprüfen der Messeinrichtung ausgewertet wird.

Die Konzentration des Testmusters in dem Längsstromanteil hat zur Folge, dass sich der Teststromanteil nur wenig oder gar nicht auf den drehmomentbildenen Anteil der Antriebströme auswirkt. Daher ist das Drehmoment des elektrischen Antriebs (und infolgedessen auch andere Bewegungsgrößen, wie die Drehzahl oder die Beschleunigung) von dem Testmuster unbeeinflusst. Mit anderen Worten werden die Bewegungsgrößen des Antriebs, insbesondere das Drehmoment, durch das Testmuster nicht oder allenfalls in einem vernachlässigbaren Ausmaß verändert.

Aus diesem Grund eignen sich das neue Verfahren und die neue Vorrichtung besonders gut, um das Drehmoment eines elektrischen Antriebs auf kostengünstige und fehlersichere Weise zu überwachen. Darüber hinaus können das neue Verfahren und die neue Vorrichtung aber auch zum kostengünstigen und fehlersicheren Überwachen anderer Bewegungsgrößen eines Antriebs verwendet werden. Die oben genannte Aufgabe ist daher vollständig gelöst.

In einer bevorzugten Ausgestaltung der Erfindung wird zumindest eines der Messsignale einkanalig gemessen. Vorzugsweise ist die Messeinrichtung für beide Messsignale jeweils einkanalig ausgebildet, d.h. der erste und der zweite Antriebsstrom werden jeweils einkanalig gemessen. Für jeden der beiden Antriebsströme liegt dann ein einzelner Messwert bzw. ein einzelnes Messsignal vor, das die Momentanwerte der Antriebsströme zu einem definierten Zeitpunkt repräsentiert.

Die einkanalige Messeinrichtung ermöglicht eine wesentlich kostengünstigere Realisierung als eine zwei- oder mehrkanalige Messeinrichtung, mit der jedes Messsignal mehrfach redundant erfasst wird. Allerdings birgt eine einkanalige Messeinrichtung prinzipiell das Risiko, dass Messwerte fehlerhaft erfasst werden, ohne dass dies erkannt wird. Dieses Risiko wird bei dem neuen Verfahren und der neuen Vorrichtung jedoch dadurch beseitigt, dass die Messeinrichtung mit Hilfe des Teststromanteils regelmäßig getestet wird. Infolgedessen ermöglichen die neue Vorrichtung und das neue Verfahren eine kostengünstige einkanalige Messwerterfassung für die sicherheitsrelevante Überwachung einer Bewegungsgröße an einem elektrischen Antrieb.

In einer weiteren Ausgestaltung ist das definierte Testmuster ein weitgehend pulsartiges Signal.

In dieser Ausgestaltung beinhaltet das Testmuster eine Vielzahl von Pulsen, die in definierten Zeitintervallen aufeinander folgen. Die Testpulse können in regelmäßigen oder in unregelmäßigen Abständen aufeinander folgen. Die Frequenz der Pulsfolge liegt in einigen Ausführungsbeispielen zwischen 1 KHz und 50 KHz. Die Pulsdauer eines einzelnen Testpulses ist vorzugsweise sehr kurz im Vergleich mit der Periodendauer der Pulsfolge. Ein pulsartiges Testmuster kann auf sehr einfache und fehlersichere Weise ausgewertet werden. Darüber hinaus kann mit einem solchen Testmuster der Einfluss des Teststromanteils auf die Antriebsströme und die zu überwachenden Bewegungsgrößen minimiert werden.

In einer weiteren Ausgestaltung werden der erste und zweite Antriebsstrom mit einem geschlossenen Regelkreis erzeugt, der zumindest den Längsstromanteil als Regelgröße verwendet.

Diese Ausgestaltung ermöglicht eine sehr elegante und kostengünstige Realisierung des neuen Verfahrens und der neuen Vorrichtung, da der das Testmuster tragende Längsstromanteil als Regelgröße ohnehin vorhanden ist und folglich einfach ausgewertet werden kann. Darüber hinaus besitzt diese Ausgestaltung den Vorteil, dass langsame Einflüsse des Testmusters auf die Erzeugung der Bewegungsgröße aufgrund der Regelung reduziert werden.

In einer weiteren Ausgestaltung wird der Teststromanteil mit Hilfe eines variablen Sollwertes für den Regelkreis erzeugt.

Diese Ausgestaltung ermöglicht eine sehr einfache und kostengünstige Realisierung des neuen Verfahrens und der neuen Vorrichtung, indem der Sollwert für den Längsstromregelkreises in Übereinstimmung mit dem gewünschten Testmuster verändert wird. Aufgrund des Regelkreises verändert sich dann zwangsläufig der Längsstromanteil, ohne dass ein zusätzlicher Signalgenerator benötigt wird.

In einer weiteren Ausgestaltung bildet der variable Sollwert das Testmuster.

In dieser Ausgestaltung ist der "normale" oder betriebsmäßige Sollwert des Regelkreises für den Längsstromanteil Null, d.h. der Längsstromanteil wird im Rahmen der Antriebsregelung auf Null geregelt. Dem betriebsmäßigen Sollwert "Null" wird nun das Testmuster überlagert. Damit wird der Längsstromanteil nur innerhalb der (vorzugsweise) kurzen Zeitintervalle, die für die Erzeugung des Testmusters benötigt werden, auf einen (Betrags-)Wert größer als Null eingestellt. Wenn das testmuster wegfällt oder "Pause macht", ist der Sollwert des Längsstromregelkreise wieder Null. In dieser Ausgestaltung lässt sich das Testmuster sehr einfach anhand der im Regelkreis vorhandenen Signale identifizieren und detektieren. In einigen Ausführungsbeispielen genügt es, den Längsstromanteil auf das Vorhandensein des Testmusters zu überwachen. Andererseits eignet sich diese Ausgestaltung besonders gut zum Überwachen von Bewegungsgrößen eines häufig verwendeten Synchronantriebs, da dieser in der Regel nur einen Querstromanteil benötigt. Dementsprechend ist der Antrieb in bevorzugten Varianten dieser Ausgestaltung ein Synchronantrieb.

In einer weiteren Ausgestaltung wird der Teststromanteil mit einer fehlersicheren Schaltungskomponente erzeugt, die dazu ausgebildet ist, ein Fehlersignal in Abhängigkeit von dem Längsstromanteil zu erzeugen. Vorzugsweise besitzt die fehlersichere Schaltungskomponente zumindest zwei redundante Signalverarbeitungskanäle zum Erzeugen und/oder Auswerten des Teststromanteils und des Längsstromanteils mit dem Testmuster.

Diese Ausgestaltung ermöglicht auf bewährte und zuverlässige Weise eine fehlersichere Abschaltung des Antriebs, wenn die überwachte Bewegungsgröße einen zulässigen Wertbereich verlässt. Damit trägt diese Ausgestaltung zu einer hohen Fehlersicherheit des neuen Verfahrens und der neuen Vorrichtung bei, selbst wenn die Messung der zumindest zwei Antriebsströme jeweils einkanalig erfolgt.

In einer weiteren Ausgestaltung werden der erste und zweite Antriebsstrom mit einer Antriebssteuerung erzeugt, in der die fehlersichere Schaltungskomponente integriert ist.

In dieser Ausgestaltung bildet die Schaltungskomponente einen integrierten Teil einer Antriebssteuerung, die alle wesentlichen Steuerfunktionen für den überwachten Antrieb realisiert. In einigen Ausführungsbeispielen ist die Schaltungskomponente eine Einsteckkarte, die in einen geeigneten Steckplatz einer für sich genommen nicht-fehlersicheren Antriebssteuerung eingesteckt werden kann. In diesen Ausführungsbeispielen kann die Schaltungskomponente den Antriebsregelkreis der Antriebssteuerung in vorteilhafter Weise verwenden, um das Testmuster auf kostengünstige und elegante Weise zu erzeugen. Die Ausgestaltung ermöglicht einen modularen Aufbau der neuen Vorrichtung und erleichtert eine kostengünstige Nachrüstung der fehlersicheren Überwachung in älteren nicht-fehlersicheren Antriebssteuerungen. Andererseits besitzt die Integration der fehlersicheren Schaltungskomponente in die Antriebssteuerung den Vorteil, dass die Überwachung der Bewegungsgröße nicht von einer externen Verkabelung abhängt. Infolgedessen werden Risiken aufgrund falscher oder beschädigter Verkabelung reduziert.

In einer weiteren Ausgestaltung ist die Bewegungsgröße proportional zu dem Querstromanteil, wobei ein Fehlersignal erzeugt wird, wenn der Querstromanteil einen definierten Schwellenwert übersteigt.

Diese Ausgestaltung ist sehr vorteilhaft, um ein maximal zulässiges Drehmoment des Antriebs auf elegante und fehlersichere Weise zu überwachen. Die Drehmomentüberwachung kann allein mit Hilfe der einkanalig gemessenen Antriebsströme realisiert werden, wobei diese Messsignale für die betriebsmäßige Steuerung des Antriebs ohnehin benötigt werden.

In einer weiteren Ausgestaltung wird der Istwert der Bewegungsgröße ferner mit Hilfe eines Sensors bestimmt, der ein drehzahlabhängiges Sensorsignal liefert.

Diese Ausgestaltung ermöglicht einen vorteilhaften Plausibilitätsvergleich mit den Ergebnissen, die anhand der gemessenen Antriebsströme gewonnen werden. Daher bietet diese Ausgestaltung eine noch höhere Fehlersicherheit und darüber hinaus eine höhere Verfügbarkeit der neuen Vorrichtung bei Auftreten eines Fehlers in der Messeinrichtung.

In einer weiteren Ausgestaltung, die auch für sich genommen eine Erfindung darstellt, wird in Abhängigkeit von dem Sensorsignal ein sensorunabhängiges Positionssignal bestimmt, das eine Betriebsposition des beweglichen Teils repräsentiert.

In dieser Ausgestaltung wird zunächst ein Positionssignal bestimmt, das eine Momentanposition des Antriebs repräsentiert, vorzugsweise als Absolutwert in einem definierten Koordinatensystem des Antriebs. Vorteilhafterweise ist das Positionssignal ein digitales Signal, das unabhängig vom Typ des verwendeten Sensors ist. Beispielsweise kann der Sensor ein Inkrementalsensor mit einer optischen, induktiven und/oder kapazitiven Erfassung der Inkrementalschritte sein. In anderen Ausführungsbeispielen kann der Sensor ein Signal liefern, das die Momentanposition des Antriebs mit Hilfe eines Gray-Codes angibt. In wiederum anderen Ausführungsbeispielen kann der Sensor ein Resolver sein, der ein analoges Sinus- und ein analoges Kosinussignal liefert, aus dem sich die Momentanposition des Antriebs bestimmen lässt. In allen Fällen ist das sensorunabhängige Positionssignal gleich. Vorzugsweise liefert es eine Absolutposition des Antriebs in Form eines digitalen Signals, wobei das sensorunabhängige Positionssignal zur Regelung des Antriebs und/oder zum Überwachen der Bewegungsgröße verwendet wird. Die Ausgestaltung bietet dem Anwender eine große Flexibilität bei der Wahl des Sensors, und sie ermöglicht eine besonders kostengünstige Realisierung der neuen Vorrichtung und der neuen Verfahrens.

In einer weiteren Ausgestaltung wird mit Hilfe des ersten und zweiten Antriebsstroms ein Antriebsmoment erzeugt, das größer ist als ein definiertes Bremsmoment einer mechanischen Bremse, wobei die Bewegungsgröße einen Stillstand des beweglichen Teils repräsentiert.

In dieser Ausgestaltung ermöglichen die neue Vorrichtung und das neue Verfahren eine einfache und kostengünstige Überprüfung einer externen Bremse für den Antrieb, indem testweise ein Antriebsmoment erzeugt wird, das größer ist als das geforderte maximale Bremsmoment der Bremse. Wenn der Antrieb bei geschlossener Bremse (mit maximal gefordertem Bremsmoment) trotz dieses Antriebsmoments stillsteht, deutet dies auf eine zuverlässige Funktion der externen Bremse hin. Die Überwachung des Stillstandes kann auf einfache und elegante Weise allein anhand der gemessenen Antriebsströme erfolgen, wenn eine fehlersichere Messung gewährleistet ist. Letztere wird bei dem neuen Verfahren und der neuen Vorrichtung mit Hilfe des neuen Testmusters erreicht.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

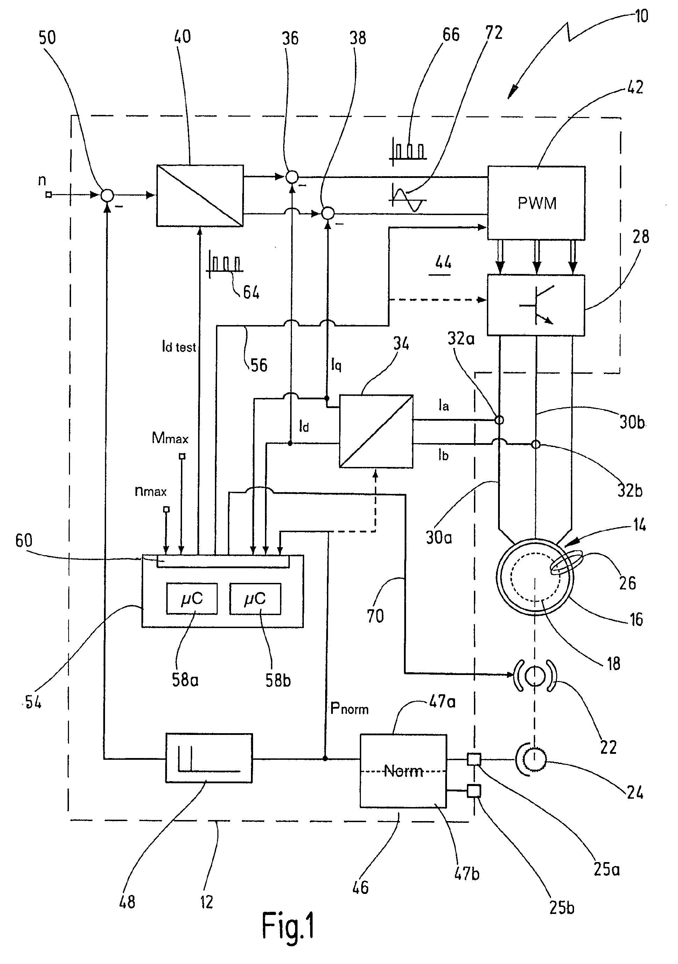

Nachfolgend werden Ausführungsbeispiele der Erfindung anhand einer Zeichnung erläutert. Die einzige Figur 1 zeigt eine schematische Darstellung eines Ausführungsbeispiels der neuen Vorrichtung und des neuen Verfahrens unter Verwendung eines geschlossenen Regelkreises.

In Figur 1 ist eine Vorrichtung gemäß einem Ausführungsbeispiel der Erfindung in ihrer Gesamtheit mit der Bezugsziffer 10 bezeichnet. Die Vorrichtung 10 beinhaltet eine Antriebssteuerung 12 zum betriebsmäßigen Steuern eines Antriebs 14. Der Antrieb 14 besitzt einen feststehenden Teil (Stator) 16 und einen beweglichen Teil 18, der hier als Rotor ausgebildet ist. Der Rotor 18 ist hier als Innenläufer innerhalb des Stators 16 angeordnet. Prinzipiell können die neue Vorrichtung und das neue Verfahren jedoch auch bei Antrieben mit außen laufendem Rotor und darüber hinaus auch bei elektrischen Antrieben verwendet werden, die anstelle einer Drehbewegung eine Translationsbewegung hervorrufen (Linearantriebe).

Der Rotor 18 ist hier über eine Welle 20 mit einer mechanischen Bremse 22 und mit einem Sensor 24 verbunden. Der Sensor 24 ist beispielsweise ein Inkrementalsensor mit einer optischen, induktiven und/oder kapazitiven Erfassung der Drehbewegung der Welle 20. Des Weiteren könnte der Sensor 24 ein Resolver oder ein Absolutwertsensor sein, der eine Drehwinkelposition der Welle 20 in Form eines digitalen Wertes liefert. In einigen Ausführungsbeispielen besitzt die Antriebssteuerung 12 ein Gehäuse mit mehreren Anschlussbuchsen 25a, 25b, wobei jede Anschussbuchse 25 zum Anschluss eines anderen Sensortyps ausgebildet ist. Beispielsweise ist die Anschlussbuchse 25a als Standardbuchse zum Anschluss von Inkrementalsensoren aus gebildet, während die Anschlussbuchse 25b als Standardbuchse zum Anschluss eines Resolvers oder eines Gray-Code-Sensors ausgebildet ist. Die Buchsen 25a, 25b besitzen dementsprechend die übliche mechanische Form und die übliche Anzahl von Kontakten zum Anschluss der jeweiligen Sensoren.

Die Antriebssteuerung 12 erzeugt in dem Antrieb 14 ein magnetisches Wechselfeld 26, das hier nur vereinfacht mit zwei magnetischen Feldlinien dargestellt ist. Das Wechselfeld 26 wird mit Hilfe von Antriebströmen erzeugt, die ein Antriebsverstärker 28 liefert. Der Antriebsverstärker 28 ist über drei Leitungen 30a, 30b, 30c mit dem Antrieb 14 verbunden. Jede der drei Leitungen 30 führt einen Antriebsstrom, wobei die drei Antriebsströme üblicherweise sinusförmige Signale mit gleicher Amplitude und relativ zueinander verschobener Phase sind. Die drei Antriebsströme erzeugen zusammen das Wechselfeld 26, das in der Regel um den Stator 16 umläuft und den Rotor 18 bewegt.

Mit den Bezugszeichen 32a, 32b sind zwei Messpunkte einer Messeinrichtung 32 bezeichnet, mit der zwei der drei Antriebsströme gemessen werden. Die beiden gemessenen Antriebsströme sind hier mit Iₐ und I_{b} bezeichnet. Die Messeinrichtung 32 kann beispielsweise Shunt-Widerstände beinhalten, an denen die Antriebsströme in Form von Spannungssignalen abgegriffen werden. Prinzipiell könnten alle drei Antriebsströme in den Zuleitungen 30 gemessen und ausgewertet werden. Da die drei Antriebsströme jedoch in einem festen Verhältnis zueinander stehen, genügt die Messung von zwei der drei Antriebsströme.

Mit der Bezugsziffer 34 ist ein Wandler bezeichnet, der in Abhängigkeit von den gemessenen Antriebsströmen Iₐ, I_{b} einen Querstromanteil I_{q} und einen Längsstromanteil I_{d} bestimmt. Der Querstromanteil I_{q} ist derjenige Anteil des resultierenden Stromzeigers der drei Antriebsströme, der für die Erzeugung des Drehmoments in dem Rotor 18 verantwortlich ist. Der Querstromanteil I_{q} ist somit ein Stromanteil, der quer zum magnetischen Feld im Rotor 18 fließt.

Der Längsstromanteil I_{d} ist die orthogonale Komponente des resultierenden Stromzeigers. Sie trägt zur Drehmomentbildung im Rotor 18 nicht bei, weil der Strom parallel zu den Feldlinien im Rotor 18 fließt. Die Bestimmung des Längsstromanteils I_{d} und des Querstromanteils I_{q} in Abhängigkeit von den gemessenen Antriebsströmen Iₐ, I_{b} erfolgt mit Hilfe von Transformationsgleichungen, die den einschlägigen Fachleuten für elektrische Antriebe bekannt sind und die der Einfachheit halber hier nicht im Detail wiedergegeben sind.

Der Längsstromanteil I_{d} und der Querstrom I_{q} sind hier jeweils einem Summationspunkt 36, 38 zugeführt. Der Summationspunkt 36 erhält ferner einen Sollwert für den Längsstrom I_{d}, den ein weiterer Wandler 40 erzeugt. Der Summationspunkt 38 erhält einen Sollwert für den Querstrom I_{q}, den hier ebenfalls der Wandler 40 erzeugt. Der Wandler 40 bestimmt die beiden Sollwerte I*_{d}, I*_{q} hier in Abhängigkeit von einer Solldrehzahl n*, mit der der Rotor 18 des Antriebs 14 drehen soll. An dem Summationspunkt 36, 38 wird eine Differenz zwischen dem jeweiligen Sollwert I*_{d} bzw. I*_{q} und den vom Wandler 34 gelieferten Istwerten I_{d} bzw. I_{q} bestimmt.

Die Differenz ergibt jeweils eine Regelabweichung, die einer Steuereinheit 42 zugeführt ist. Die Steuereinheit 42 bestimmt in Abhängigkeit von den Regelabweichungen Steuersignale für den Antriebsverstärker 28, der die Antriebsströme für den Antrieb 14 erzeugt. Typischerweise erzeugt die Steuereinheit 42 pulsweitenmodulierte Steuersignale, mit denen Schalttransistoren in dem Antriebsverstärker 28 angesteuert werden.

Insgesamt bilden der Antriebsverstärker 28, die Messeinrichtung 32, die Wandler 34 und 40, die Summationspunkte 36, 38 und die Steuereinheit 42 einen geschlossenen Regelkreis 44, mit dem die Antriebsströme in Abhängigkeit von einem externen Sollwert, wie der Drehzahl n*, erzeugt werden.

Im vorliegenden Ausführungsbeispiel beinhaltet die Vorrichtung 10 einen weiteren übergeordneten Regelkreis für die Drehzahl n des Antriebs 14. Der weitere Regelkreis beinhaltet den Drehzahlsensor 24, dessen Ausgangssignal über die Anschlussbuchse 25a einer Positionsberechnungseinheit 46 zugeführt ist. Die Positionsberechnungseinheit 46 ist dazu ausgebildet, einen sensorunabhängigen Positionswert Pₙₒᵣₘ zu bestimmen, der eine momentane Drehwinkelposition des Rotors 18 relativ zu einem Referenzpunkt repräsentiert. Die Positionsberechnungseinheit 46 liefert den Positionswert Pₙₒᵣₘ hier in einer normierten, vom Typ des Sensors 24 unabhängigen Weise, insbesondere als digitalen Positionswert. In den bevorzugten Ausführungsbeispielen erhält die Positionsberechnungseinheit 46 die Ausgangssignale eines an die Buchsen 25a, 25b angeschlossenen Sensors 24 als analoge Signale, und sie bestimmt in Abhängigkeit von den analogen Signalen den digitalen Positionswert Pₙₒᵣₘ.

Die Positionsberechnungseinheit 46 besitzt hier mehrere voneinander verschiedene Signalpfade 47a, 47b, wobei jeder Signalpfad zur Verarbeitung eines anderen Sensortyps ausgebildet ist. Jeder Signalpfad 47a, 47b ist mit einer der Buchsen 25a, 25b verbunden, an die ein Sensor des zu dem Signalpfad passenden Typs angeschlossen werden kann. Die Positionsberechnungseinheit 46 ist aufgrund der verschiedenen Signalpfade 47a, 47b ein relativ komplexer Schaltungsbestandteil, der jedoch eine große Flexibilität beim Anschluss von Sensoren ermöglicht. In einigen Ausführungsbeispielen ist die Positionsberechnungseinheit 46 ein ASIC. Ein komplexer Schaltungsbestandteil ist an sich von Nachteil, wenn die Signale und/oder Informationen des Schaltungsbestandteils für sicherheitsrelevante Funktionen, wie die fehlersichere Drehzahl- und/oder Drehmomentüberwachung, benötigt werden. Im vorliegenden Fall kann die Positionsberechnungseinheit 46 jedoch komplex realisiert sein, da die Überwachung anhand Strommessung einen redundanten zweiten Kanal zur Verfügung stellt, so dass eine Fehlerbetrachtung in Bezug auf Details der Positionsberechnungseinheit 46 entfallen kann.

Mit der Bezugsziffer 48 ist ein Differenzierglied bezeichnet, das den normierten Positionswert Pₙₒᵣₘ erhält und an seinem Ausgang einen differenzierten Positionswert liefert, der eine Momentandrehzahl n des Rotors 18 repräsentiert. Die Momentandrehzahl n wird an einem Summationspunkt 50 von der extern zugeführten SollDrehzahl n* subtrahiert. Die Differenz ist als Regelabweichung dem Wandler 40 zugeführt, der in Abhängigkeit von dieser Regelabweichung die Sollwerte I*_{d}, I*_{q} für den Längsstromanteil und den Querstromanteil bestimmt.

Mit Bezugsziffer 54 ist eine Schaltungskomponente bezeichnet, die unter anderem den Längsstromanteil I_{d} und den Querstromanteil I_{q} von dem Wandler 34 erhält. Des Weiteren kann die Schaltungskomponente 54 den normierten Positionswert Pₙₒᵣₘ von der Positionsberechnungseinheit 46 und/oder die gemessenen Strome Iₐ, I_{b} erhalten. Außerdem erhält die Schaltungskomponente 54 hier einen Schwellenwert für ein maximal zulässiges Drehmoment Mₘₐₓ und einen weiteren Schwellenwert für eine maximal zulässige Drehzahl nₘₐₓ. Die Schwellenwerte Mₘₐₓ und nₘₐₓ sind Parameter, die beim Konfigurieren der Vorrichtung 10 eingestellt und in einem Speicher der Schaltungskomponente 54 gespeichert werden.

Die Schaltungskomponente 54 ist dazu ausgebildet, die Momentandrehzahl n und das tatsächliche Drehmoment M des Antriebs 14 zu überwachen. Wenn der Istwert des Drehmoments M und/oder der Drehzahl n die gewählten Maximalwerte übersteigt, erzeugt die Schaltungskomponente 54 ein Fehlersignal 56, das in diesem Fall der Steuereinheit 42 und/oder dem Antriebsverstärker 28 zugeführt ist. Mit Hilfe des Fehlersignals 56 kann die Schaltungskomponente 54 die Erzeugung der pulsweitenmodulierten Steuersignale für den Antriebsverstärker 28 unterdrücken und/oder den Antriebsverstärker 28 von den pulsweitenmodulierten Steuersignalen trennen. Ohne diese Steuersignale erzeugt der Antriebsverstärker 28 keine Antriebsströme. Infolgedessen wird der Antrieb 14 von der Schaltungskomponente 54 mit Hilfe des Fehlersignals 56 abgeschaltet. Darüber hinaus kann das Fehlersignal 56 eine Meldeleuchte (nicht dargestellt) aktivieren und/oder einen oder mehreren externe Schütze (nicht dargestellt) abschalten, deren Arbeitskontakte in den Leitungen 30 angeordnet sind und mit denen der Antrieb 14 von dem Antriebsverstärker 28 getrennt wird.

In den bevorzugten Ausführungsbeispielen ist die Schaltungskomponente 54 mehrkanalig-redundant aufgebaut. Dies ist in der Figur anhand von zwei redundanten Mikrokontrollern 58a, 58b dargestellt. Alternativ zu einem oder beiden Mikrokontrollern 58a, 58b könnte die Schaltungskomponente 54 funktionsspezifische Logikschaltkreise, etwa einen ASIC beinhalten. Bei der Bezugsziffer 60 ist ein Interface dargestellt, über das die Schaltungskomponente 54 die Eingangssignale von dem Wandler 34 u.a. empfängt und Ausgangssignale, wie das Fehlersignal 56, ausgeben kann.

Das Ist-Drehmoment des Antriebs 14 ist proportional zu dem Querstromanteil I_{q}. Die beiden Kanäle 58a, 58b der Schaltungskomponente 54 bestimmen hier redundant zueinander das Ist-Drehmoment in Abhängigkeit von dem Querstromanteil I_{q}.

Um eine fehlersichere Strommessung der Antriebsströme Iₐ, I_{b} und somit eine fehlersichere Bestimmung des Querstromanteils I_{q} zu gewährleisten, überprüft die Schaltungskomponente 54 die Messeinrichtung 32 und den Wandler 34 mit Hilfe eines künstlich erzeugten Testmusters 64. Die Schaltungskomponente 54 ist dazu ausgebildet, das Testmuster 64 als Sollwertvariation für den Längsstromanteil I_{d} zu erzeugen. Das Testmuster 64 ist dem Wandler 40 zugeführt, der die Sollwerte für den Längsstromanteil I_{d} und I_{q} bestimmt. Im einfachsten Fall addiert der Wandler 40 digitale Werte, die das Testmuster 64 repräsentieren, zu dem "normalen" Sollwert für den Längsstromanteil I_{d}.

In einem bevorzugten Ausführungsbeispiel ist der Antrieb 14 ein Synchronantrieb, für den der Längsstromanteil I_{d} betriebsmäßig auf Null geregelt wird. Infolgedessen wird der Längsstrom I_{d} hier mit einem pulsartigen Signal 66 mit einer Vielzahl von aufeinanderfolgenden Pulsen "moduliert", die dem Testmuster 64 entsprechen. Der Querstromanteil I_{q} wird demgegenüber mit einem "normalen" betriebsmäßigen Verlauf geregelt. Das pulsartige Signal 66 wird von der Steuereinheit 42 verarbeitet und verändert folglich die Antriebsströme für den Antrieb 14..

Die Schaltungskomponente 54 erhält den aus den gemessenen Antriebsströmen bestimmten Längsstromanteil I_{d} von dem Wandler 34 und kann somit anhand des Testmusters 64 überprüfen, ob die Strommessung und der Wandler 34 fehlerfrei funktionieren.

In dem dargestellten Ausführungsbeispiel bestimmt die Schaltungskomponente 54 in Abhängigkeit von dem Querstromanteil I_{q} und dem Längsstromanteil I_{d} ferner einen Istwert für die Drehzahl des Antriebs 14 und überprüft, ob der Drehzahlistwert kleiner ist als der gewählte Schwellenwert nₘₐₓ. In einem zweiten Kanal wertet die Schaltungskomponente 54 den normierten Positionswert Pₙₒᵣₘ und/oder die vom Differenzierer 48 bestimmte Ist-Drehzahl n des Sensors 24 aus. Alternativ hierzu kann die Schaltungskomponente 54 die Ist-Drehzahl auch ohne Sensor 24 allein anhand der Stromanteile I_{q} und I_{d} überwachen.

In einem bevorzugten Ausführungsbeispiel ist die Antriebssteuerung 12 mit Hilfe der Schaltungskomponente 54 außerdem in der Lage, die Bremse 22 auf Funktionsfähigkeit zu überprüfen. Hierzu erzeugt die Schaltungskomponente 54 ein Bremssignal 70, das die Bremse 22 mit einem maximal möglichen Bremsmoment schließt. Des Weiteren erzeugt die Antriebssteuerung 12 mit Hilfe des Wandlers 40 einen Querstromanteil 72, der ein Antriebsmoment in dem Antrieb 14 zur Folge hat. Nun überwacht die Schaltungskomponente 54 mit Hilfe der gemessenen Antriebsströme und der daraus bestimmten Stromanteile I_{q}, I_{d} und/oder mit Hilfe des Sensors 24, ob der Rotor 18 bzw. die Welle 20 stillstehen oder nicht. Im zuerst genannten Fall ist die Bremse 22 in der Lage, den Antrieb 14 gegen das erzeugte Antriebsmoments stillzusetzen, d.h. die Bremse 22 funktioniert. Im zuletzt genannten Fall ist die Bremse 22 nicht (mehr) in der Lage, einem Stillstand der Welle 20 zu gewährleisten. In diesem Fall erzeugt die Schaltungskomponente 54 vorteilhafterweise wieder das Fehlersignal 56.

Das neue Verfahren und die neue Vorrichtung eignen sich besonders gut zum Überwachen einer Bewegungsgröße bei einem synchronen Antrieb. Besonders vorteilhaft sind die neue Vorrichtung und das neue Verfahren bei einem Synchronantrieb, der einen starken Permanentmagneten im Rotor aufweist, weil in diesem Fall das Testmuster 64 des felderzeugenden Längsstromanteils I_{d} das ohnehin vorhandene Magnetfeld des Rotors 18 kaum oder nicht erkennbar beeinflusst. Grundsätzlich können das neue Verfahren und die neue Vorrichtung jedoch auch bei anderen Drehfeldmaschinen einschließlich Asynchronmaschinen verwendet werden. Darüber hinaus sind das neue Verfahren und die neue Vorrichtung auch bei translatorisch bewegten Antrieben verwendbar.

## Patentansprüche

1. Verfahren zum fehlersicheren Überwachen einer Bewegungsgröße an einem elektrischen Antrieb (14) mit einem feststehenden Teil (16) und einem beweglichen Teil (18), mit den Schritten:
- Erzeugen eines ersten und zumindest eines zweiten Antriebsstroms (Iₐ, I_{b}) in Abhängigkeit von einem Sollwert (n*) der Bewegungsgröße,
- Erzeugen eines magnetischen Wechselfeldes (26) in dem Antrieb (14) mit Hilfe des ersten und zweiten Antriebsstroms (Iₐ, I_{b}), wobei das magnetische Wechselfeld (26) eine Bewegung des beweglichen Teils (18) bewirkt,
- Bestimmen eines ersten Messsignals (32a), das den ersten Antriebsstrom (Ia) repräsentiert, und Bestimmen eines zweiten Messsignals (32b), das den zweiten Antriebsstrom (I_{b}) repräsentiert, mit Hilfe einer Messeinrichtung (32),
- Bestimmen eines felderzeugenden Längsstromanteils (I_{d}) und eines momentenerzeugenden Querstromanteils (I_{q}) in Abhängigkeit von dem ersten und zweiten Messsignal (32a, 32b), und
- Bestimmen eines Istwertes der Bewegungsgröße in Abhängigkeit von dem ersten und zweiten Messsignal (32a, 32b),
**dadurch gekennzeichnet, dass** zumindest einer der Antriebsströme (Iₐ, I_{b}) mit einem variablen Teststromanteil (66) erzeugt wird, der ein definiertes Testmuster (64) zum Überprüfen der Messeinrichtung (32) bildet, wobei der Teststromanteil (66) so gewählt ist, dass das definierte Testmuster (64) in dem Längsstromanteil (I_{d}) erscheint, während der Querstromanteil (I_{q}) frei von dem Testmuster (64) ist.

2. Verfahren nach Anspruch 1, **dadurch gekennzeichnet, dass** zumindest eines der Messsignale (32a, 32b) einkanalig gemessen wird.

3. Verfahren nach Anspruch 1 oder 2, **dadurch gekennzeichnet, dass** das definierte Testmuster (64) ein pulsartiges Signal ist.

4. Verfahren nach einem der Ansprüche 1 bis 3, **dadurch gekennzeichnet, dass** der erste und zweite Antriebsstrom (Iₐ, I_{b}) mit einem geschlossenen Regelkreis (44) erzeugt werden, der zumindest den Längsstromanteil (I_{d}) als Regelgröße verwendet.

5. Verfahren nach Anspruch 4, **dadurch gekennzeichnet, dass** der Teststromanteil (66) mit Hilfe eines variablen Sollwertes (I_{dtest}) für den Regelkreis (44) erzeugt wird.

6. Verfahren nach Anspruch 5, **dadurch gekennzeichnet, dass** der variable Sollwert (I_{dtest}) das Testmuster (64) bildet.

7. Verfahren nach einem der Ansprüche 1 bis 6, **dadurch gekennzeichnet, dass** der Teststromanteil (66) mit einer fehlersicheren Schaltungskomponente (54) erzeugt wird, die dazu ausgebildet ist, ein Fehlersignal (56) in Abhängigkeit von dem Längsstromanteil (I_{d}) zu erzeugen.

8. Verfahren nach Anspruch 7, **dadurch gekennzeichnet, dass** der erste und zweite Antriebsstrom (Iₐ, I_{b}) mit einer Antriebssteuerung (12) erzeugt werden, in der die fehlersichere Schaltungskomponente (54) integriert ist.

9. Verfahren nach einem der Ansprüche 1 bis 8, **dadurch gekennzeichnet, dass** die Bewegungsgröße proportional zu dem Querstromanteil (I_{q}) ist, wobei ein Fehlersignal (56) erzeugt wird, wenn der Querstromanteil (I_{q}) einen definierten Schwellenwert (Mₘₐₓ) übersteigt.

10. Verfahren nach einem der Ansprüche 1 bis 9, **dadurch gekennzeichnet, dass** der Istwert der Bewegungsgröße ferner mit Hilfe eines Sensors (24) bestimmt wird, der ein drehzahlabhängiges Sensorsignal liefert.

11. Verfahren nach Anspruch 10, **dadurch gekennzeichnet, dass** in Abhängigkeit von dem Sensorsignal ein sensorunabhängiges Positionssignal (Pₙₒᵣₘ) bestimmt wird, das eine Betriebsposition des beweglichen Teils (18) repräsentiert.

12. Verfahren nach einem der Ansprüche 1 bis 11, **dadurch gekennzeichnet, dass** mit Hilfe des ersten und zweiten Antriebsstroms (Iₐ, I_{b}) ein Antriebsmoment erzeugt wird, das größer ist als ein definiertes Bremsmoment einer mechanischen Bremse (22), wobei die Bewegungsgröße einen Stillstand des beweglichen Teils (18) repräsentiert.

13. Vorrichtung zum fehlersicheren Überwachen einer Bewegungsgröße an einem elektrischen Antrieb (14), der einen feststehenden Teil (16) und einen beweglichen Teil (18) besitzt, mit einem Antriebsverstärker (28) zum Erzeugen eines ersten und zumindest eines zweiten Antriebsstroms (Iₐ, I_{b}) in Abhängigkeit von einem Sollwert (n*) der Bewegungsgröße, mit einem ersten Strompfad (30a) zum Zuführen des ersten Antriebsstroms und zumindest einem zweiten Strompfad (30b) zum Zuführen des zweiten Antriebsstroms zu dem Antrieb (14), um ein magnetisches Wechselfeld (26) in dem Antrieb (14) zu erzeugen, wobei das magnetische Wechselfeld (26) eine Bewegung des beweglichen Teils (18) bewirkt, mit einer Messeinrichtung (32) zum Bestimmen eines ersten Messsignals (32a), das den ersten Antriebsstrom (Iₐ) repräsentiert, und zum Bestimmen eines zweiten Messsignals (32b), das den zweiten Antriebsstrom (I_{b}) repräsentiert, mit einem Wandler (34) zum Bestimmen eines felderzeugenden Längsstromanteils (I_{d}) und eines momentenerzeugenden Querstromanteils (I_{q}) in Abhängigkeit von dem ersten und zweiten Messsignal (32a, 32b), und mit einer Überwachungsschaltung (54) zum Bestimmen eines Istwertes der Bewegungsgröße in Abhängigkeit von dem ersten und zweiten Messsignal (32a, 32b), **gekennzeichnet durch** einen Teststromgenerator (40), der dazu ausgebildet ist, einen variablen Teststromanteil (66) zu erzeugen, welcher zumindest einem der Antriebsströme (Iₐ, I_{b}) überlagert ist, wobei der Teststromanteil (66) ein definiertes Testmuster (64) zum Überprüfen der Messeinrichtung (32) bildet, und wobei der Teststromanteil (66) so gewählt ist, dass das definierte Testmuster (64) in dem Längsstromanteil (I_{d}) erscheint, während der Querstromanteil (I_{q}) frei von dem Testmuster (64) ist.

## Claims

1. A method for failsafe monitoring of a movement variable on an electrical drive (14) having a stationary part (16) and a moving part (18), the method comprising the steps of
- generating a first and at least one second drive current (Iₐ, I_{b}) as a function of a nominal value (n*) of the movement variable,
- generating a alternating magnetic field (26) in the drive (14) by means of the first and second drive currents (Iₐ, I_{b}), with the alternating magnetic field (26) causing movement of the moving part (18),
- determining a first measurement signal (32a), which represents the first drive current (Ia), and determining a second measurement signal (32b), which represents the second drive current (I_{b}), by means of a measurement device (32),
- determining a field-producing direct-axis current component (I_{d}) and a torque-producing quadrature-axis current component (I_{q}) as a function of the first and second measurement signals (32a, 32b), and
- determining an actual value of the movement variable as a function of the first and second measurement signals (32a, 32b),
**characterized in that** at least one of the drive currents (Iₐ, I_{b}) is generated with a variable test current component (66) which forms a defined test pattern (64) for checking the measurement device (32), with the test current component (66) being selected such that the defined test pattern (64) appears in the direct-axis current component (I_{d}), while the quadrature-axis current component (I_{q}) is free from the test pattern (64).

2. The method of claim 1, **characterized in that** at least one of the measurement signals (32a, 32b) is measured in a single-channel fashion.

3. The method of claim 1 or 2, **characterized in that** the defined test pattern (64) is a pulse-like signal.

4. The method of one of claims 1 to 3, **characterized in that** the first and second drive currents (Iₐ, I_{b}) are generated with a closed control loop (44) which uses at least the direct-axis current component (I_{d}) as a controlled variable.

5. The method of claim 4, **characterized in that** the test current component (66) is generated by means of a variable nominal value (I_{dtest}) for the control loop (44).

6. The method of claim 5, **characterized in that** the variable nominal value (I_{dtest}) forms the test pattern (64).

7. The method of one of claims 1 to 6, **characterized in that** the test current component (66) is generated by a failsafe circuit component (54) which is designed to produce a fault signal (56) as a function of the direct-axis current component (I_{d}).

8. The method of claim 7, **characterized in that** the first and second drive currents (Iₐ, I_{b}) are generated by a drive controller (12) in which the failsafe circuit component (54) is integrated.

9. The method of one of claims 1 to 8, **characterized in that** the movement variable is proportional to the quadrature-axis current component (I_{q}), with a fault signal (56) being generated if the quadrature-axis current component (I_{q}) exceeds a defined threshold value (Mₘₐₓ).

10. The method of one of claims 1 to 9, **characterized in that** the actual value of the movement variable is further determined by means of a sensor (24) which produces a rotation-speed-dependent sensor signal.

11. The method of claim 10, **characterized in that** a sensor-independent position signal (Pₙₒᵣₘ) is determined as a function of the sensor signal, said position signal representing an operating position of the moving part (18).

12. The method of one of claims 1 to 11, **characterized in that** a drive torque is generated by means of the first and second drive currents (Iₐ, I_{b}), which drive torque is greater than a defined braking torque of a mechanical brake (22), wherein the movement variable represents a standstill of the moving part (18).

13. An apparatus for failsafe monitoring of a movement variable on an electrical drive (14), which has a stationary part (16) and a moving part (18), the apparatus comprising a drive amplifier (28) for generating a first and at least one second drive current (Iₐ, I_{b}) as a function of a nominal value (n*) of the movement variable, comprising a first current path (30a) for supplying the first drive current and at least one second current path (30b) for supplying the second drive current to the drive (14) in order to produce an alternating magnetic field (26) in the drive (14), with the alternating magnetic field (26) causing movement of the moving part (18), comprising a measurement device (32) for determining a first measurement signal (32a) which represents the first drive current (Iₐ) and for determining a second measurement signal (32b) which represents the second drive current (I_{b}), comprising a converter (34) for determining a field-producing direct-axis current component (I_{d}) and a torque-producing quadrature-axis current component (I_{q}) as a function of the first and second measurement signals (32a, 32b), and comprising a monitoring circuit (54) for determining an actual value of the movement variable as a function of the first and second measurement signals (32a, 32b), **characterized by** a test current generator (40) designed to generate a variable test current component (66) which is superposed on at least one of the drive currents (Iₐ, I_{b}), with the test current component (66) forming a defined test pattern (64) for checking the measurement device (32), and with the test current component (66) being selected such that the defined test pattern (64) appears in the direct-axis current component (Iₐ), while the quadrature-axis current component (I_{q}) is free from the test pattern (64).

## Revendications

1. Procédé de surveillance à sécurité intrinsèque d'une grandeur de mouvement d'un dispositif d'entraînement électrique (14) comportant une partie fixe (16) et une partie mobile (18), comprenant les étapes consistant à :
- générer un premier et au moins un second courant d'attaque (Iₐ, I_{b}) en fonction d'une valeur de consigne (n*) de la grandeur de mouvement,
- générer un champ magnétique alternatif (26) dans le dispositif d'entraînement (14) à l'aide des premier et second courants d'attaque (Iₐ, I_{b}), le champ magnétique alternatif (26) provoquant un mouvement de la partie mobile (18),
- déterminer un premier signal de mesure (32a) qui représente le premier courant d'attaque (Iₐ), et déterminer un second signal de mesure (32b) qui représente le second courant d'attaque (I_{b}), à l'aide d'un dispositif de mesure (32),
- déterminer une composante de courant longitudinale génératrice de champ (I_{d}) et une composante de courant transversale génératrice de couple (I_{q}) en fonction des premier et second signaux de mesure (32a, 32b), et
- déterminer une valeur réelle de la grandeur de mouvement en fonction des premier et second signaux de mesure (32a, 32b),
**caractérisé en ce qu'**au moins l'un des courants d'attaque (Iₐ, I_{b}) est généré avec une composante de courant de test variable (66) qui forme un motif de test défini (64) pour contrôler le dispositif de mesure (32), la composante de courant de test (66) étant sélectionnée de telle manière que le motif de test défini (64) apparaisse dans la composante de courant longitudinale (I_{d}), alors que la composante de courant transversale (I_{q}) ne comporte pas le motif de test (64).

2. Procédé selon la revendication 11, **caractérisé en ce qu'**au moins l'un des signaux de mesure (32a, 32b) est mesurée sur une voie unique.

3. Procédé selon la revendication 1 ou 2, **caractérisé en ce que** le motif de test défini (64) est un signal de type impulsionnel.

4. Procédé selon l'une quelconque des revendications 1 à 3, **caractérisé en ce que** les premier et second courants d'attaque (Iₐ, I_{b}) sont générés au moyen d'une boucle d'asservissement fermée (44) qui utilise au moins la composante de courant longitudinale (I_{d}) comme variable d'asservissement.

5. Procédé selon la revendication 4, **caractérisé en ce que** la composante de courant de test (66) est générée à l'aide d'une valeur de consigne variable (I_{dtest}) pour le circuit d'asservissement (44).

6. Procédé selon la revendication 5, **caractérisé en ce que** la valeur de consigne variable (I_{dtest}) forme le motif de test (64).

7. Procédé selon l'une quelconque des revendications 1 à 6, **caractérisé en ce que** la composante de courant de test (66) est générée au moyen d'un composant de circuit à sécurité intrinsèque (54) qui est conçu pour générer un signal d'erreur (56) en fonction de la composante de courant longitudinale (I_{d}).

8. Procédé selon la revendication 7, **caractérisé en ce que** les premier et second courants (Iₐ, I_{b}) sont générés au moyen d'une unité de commande d'attaque (12) dans laquelle est intégré le composant de circuit à sécurité intrinsèque (54).

9. Procédé selon l'une quelconque des revendications 1 à 8, **caractérisé en ce que** la grandeur de mouvement est proportionnelle à la composante de courant transversale (I_{q}), un signal d'erreur étant généré (56) lorsque la composante de courant transversale (I_{q}) dépasse une valeur de seuil définie (Mₘₐₓ).

10. Procédé selon l'une quelconque des revendications 1 à 9, **caractérisé en ce que** la valeur réelle de la grandeur de mouvement est en outre déterminée à l'aide d'un capteur (24) délivrant un signal de capteur dépendant de la vitesse de rotation.

11. Procédé selon la revendication 10, **caractérisé en ce qu'**on détermine en fonction du signal de capteur un signal de détection de position indépendant du capteur (Pₙₒᵣₘ), qui représente une position de fonctionnement de la partie mobile (18).

12. Procédé selon l'une quelconque des revendications 1 à 11, **caractérisé en ce qu'**un couple d'entraînement est généré à l'aide des premier et second courants d'attaque (Iₐ, I_{b}), lequel couple est supérieur à un couple de freinage défini d'un frein mécanique (22), la grandeur de mouvement représentant un état immobile de la partie mobile (18).

13. Dispositif de surveillance à sécurité intrinsèque d'une grandeur de mouvement d'un dispositif d'entraînement électrique (14) muni d'une partie fixe (16) et d'une partie mobile (18), comprenant un amplificateur d'attaque (28) pour générer un premier et au moins un second courant d'attaque (Iₐ, I_{b}) en fonction d'une valeur de consigne (n*) de la grandeur de mouvement, comportant un premier trajet de courant (30a) pour acheminer le premier courant d'attaque et au moins un second trajet de courant (30b) pour acheminer le second courant d'attaque au dispositif d'entraînement (14) afin de générer un champ magnétique alternatif (26) dans le dispositif d'entraînement (14), le champ magnétique alternatif (26) provoquant un mouvement de la partie mobile (18), comportant un dispositif de mesure (32) pour déterminer un premier signal de mesure (32a) qui représente le premier courant d'attaque (Iₐ) et pour déterminer un second signal de mesure (32b) qui représente le second courant d'attaque (I_{b}), comportant un convertisseur (34) pour déterminer une composante de courant longitudinale génératrice de champ (I_{d}) et une composante de courant transversale génératrice de couple (I_{q}) en fonction des premier et second signaux de mesure (32a, 32b), et comportant un circuit de surveillance (54) pour déterminer une valeur réelle de la grandeur de mouvement en fonction des premier et second signaux de mesure (32a, 32b), **caractérisé par** un générateur de courant de test (40) qui est conçu pour générer une composante de courant de test variable (66) qui est superposée à au moins l'un des courants d'attaque (Iₐ, I_{b}), la composante de courant de test (66) formant un motif de test défini (64) pour contrôler le dispositif de mesure (32), et la composante de courant de test (66) étant sélectionnée de telle manière que le motif de test défini (64) apparaisse dans la composante de courant longitudinale (I_{d}), alors que la composante de courant transversale (I_{q}) ne comporte pas le motif de test (64).
